# EUROPEAN PATENT APPLICATION

(11) **EP 2 600 451 A2**
(43) Date of publication of application: **05.06.2013**
(21) Application number: 12194626.3
(22) Date of filing: 28.11.2012
(51) Int. Cl.: H01M 4/86, H01M 4/92, H01M 8/10

(54) **Electrode catalyst for fuel cell, method of preparing the same, and membrane electrode assembly and fuel cell including electrode catalyst**

(30) Priority: 29.11.2011 KR 20110126278; 02.11.2012 KR 20120123746
(71) Applicant: Samsung Electronics Co., Ltd, Gyeonggi-do 443-742 (KR); Samsung SDI Co., Ltd., Yongin-si, Gyeonggi-do (KR)
(72) Inventor: Jin, Seon-ah, 449-712 Gyeonggi-do (KR); Pak, Chan-ho, 449-712 Gyeonggi-do (KR); Yoo, Dae-jong, 449-712 Gyeonggi-do (KR); Lee, Kang-hee, 449-712 Gyeonggi-do (KR)
(74) Representative: Zijlstra, Robert Wiebo Johan

(57) **Abstract**

An electrode catalyst for a fuel cell which includes alloy particles comprising an alloy of a Group 8 metal and a Group 9 metal, a method of preparing the same, a membrane electrode assembly including the electrode catalyst, and a fuel cell including the membrane electrode assembly.

In an embodiment the alloy particles have a core-shell structure (50); i) the core (51) comprises the Group 8 metal, but does not comprise the Group 9 metal; and the shell (53) comprises the alloy of the Group 8 metal and the Group 9 metal; or ii) the core (51) comprises the alloy of the Group 8 metal and the Group 9 metal; and the shell (53) comprises the Group 9 metal, but does not comprise the Group 8 metal.

## Description

### BACKGROUND OF THE INVENTION

The present disclosure relates to electrode catalysts for fuel cells, methods of preparing the same, membrane electrode assemblies including the electrode catalysts, and fuel cells including the membrane electrode assemblies.

Fuel cells are power generation systems which directly convert chemical energy obtained from a reaction between hydrogen and oxygen into electrical energy. Unlike general batteries, fuel cells can continuously generate electricity as long as hydrogen and oxygen are supplied to the fuel cells from the outside. In addition, fuel cells can directly generate electricity, unlike a conventional power generation method in which efficiency losses occur while fuel cells are subjected to several processes, and thus fuel cells may have about two times higher efficiency than internal combustion engine.

Fuel cells may be classified into polymer electrolyte membrane fuel cells (PEMFCs), direct methanol fuel cells (DMFCs), phosphoric acid fuel cells (PAFCs), molten carbonate fuel cells (MCFCs), and solid oxide fuel cells (SOFCs), according to types of electrolyte and fuel used in the fuel cells.

The PEMFC and the DMFC generally include a membrane electrode assembly (MEA) including an anode, a cathode, and a polymer electrolyte membrane disposed between the anode and the cathode. In a fuel cell, an anode includes a catalyst layer for facilitating oxidation of a fuel and a cathode includes a catalyst layer for facilitating reduction of an oxidant.

In general, a catalyst consisting of platinum (Pt) as an active element is widely used as a constituent of an anode and a cathode. However, Pt is expensive precious metal and demands for Pt used in an electrode catalyst are still high in order to mass produce commercially available fuel cells, and thus it is necessary to decrease manufacturing costs.

Therefore, there is a need to develop an electrode catalyst which includes a small amount of Pt used therein and can provide high cell performance.

### SUMMARY OF THE INVENTION

Provided are electrode catalysts for fuel cells which exhibit a high catalytic activity and a long life battery.

Provided are methods of preparing the electrode catalysts.

Provided are membrane electrode assemblies including the electrode catalysts.

Provided are fuel cells including the membrane electrode assemblies.

Additional aspects will be set forth in part in the description which follows and, in part, will be apparent from the description, or may be learned by practice of the presented embodiments.

According to an aspect of the present invention, an electrode catalyst for a fuel cell includes alloy particles comprising an alloy of a Group 8 metal and a Group 9 metal.

The Group 8 metal may include at least one of iron (Fe), ruthenium (Ru), and osmium (Os).

The Group 9 metal may include at least one of cobalt (Co), rhodium (Rh), and iridium (Ir).

An amount of the Group 8 metal may be in a range of 8 at% to 92 at% based on 100 at% of the alloy particles.

An amount of the Group 9 metal may be in a range of 8 at% to 90 at% based on 100 at% of the alloy particles.

The alloy particles may have a core-shell structure. In the core-shell structure, i) the core may include the Group 8 metal, but does not include the Group 9 metal; and the shell may include the alloy of the Group 8 metal and the Group 9 metal; or ii) the core may include the alloy of the Group 8 metal and the Group 9 metal; and the shell may include the Group 9 metal, but does not comprise the Group 8 metal.

The alloy particles may have a core-interlayer-shell structure in which the interlayer is between the core and the shell. In the core-interlayer-shell structure, the core may include the Group 8 metal, but does not include the Group 9 metal; the interlayer may include the alloy of the Group 8 metal and the Group 9 metal; and the shell may include the Group 9 metal, but does not include the Group 8 metal.

The Group 8 metal may be ruthenium and the Group 9 metal may be iridium.

The alloy particles may consist of ruthenium and iridium.

The electrode catalyst may further include a carbonaceous support, wherein the alloy particles are supported on the carbonaceous support.

According to another aspect of the present invention, an electrode catalyst for a fuel cell includes catalyst particles comprising a Group 8 metal and a Group 9 metal. The catalyst particles may have a core-shell structure. In the core-shell structure, the core may include the Group 8 metal, but does not include the Group 9 metal; and the shell may include the Group 9 metal, but does not include the Group 8 metal.

According to another aspect of the present invention, a method of preparing an electrode catalyst for a fuel cell includes providing a mixture including a Group 8 metal precursor and a Group 9 metal precursor; and reducing the Group 8 metal precursor and the Group 9 metal precursor in the mixture to form an electrode catalyst for a fuel cell which includes alloy particles including an alloy of a Group 8 metal and a Group 9 metal.

The mixture may further include a carbonaceous support, and the electrode catalyst may further include the carbonaceous support, wherein the alloy particles are supported on the carbonaceous support.

According to another aspect of the present invention, a membrane electrode assembly for a fuel cell includes a cathode; an anode facing the cathode; and an electrolyte membrane interposed between the cathode and the anode, wherein at least one of the cathode and the anode includes the electrode catalyst described above. The anode may include the electrode catalyst.

According to another aspect of the present invention, a fuel cell includes the membrane electrode assembly described above. The anode may include the electrode catalyst.

### BRIEF DESCRIPTION OF THE DRAWINGS

These and/or other aspects will become apparent and more readily appreciated from the following description of the embodiments, taken in conjunction with the accompanying drawings in which:
FIG. 1 is a cross-sectional view schematically illustrating an catalyst, according to an embodiment;
FIG. 2 is an exploded perspective view of a fuel cell according to an embodiment;
FIG. 3 is a cross-sectional view of a membrane electrode assembly (MEA) of the fuel cell of FIG. 1, according to an embodiment;
FIG. 4 illustrates X-ray diffraction (XRD) results of the electrode catalysts prepared according to Synthesis Examples 3 and Comparative Synthesis Example 2;
FIG. 5 illustrates XRD results of the electrode catalysts prepared according to Comparative Synthesis Example 1, Synthesis Example5, Synthesis Example 1, Synthesis Example 2, Synthesis Example 4, and Comparative Synthesis Example 2;
FIG. 6 is a graph showing Fourier transform of extended X-ray absorption fine structure (EXAFS) in Synthesis Examples 2 and 3, and Comparative Synthesis Examples 1 and 2, respectively;
FIG. 7 is a graph showing evaluation results of hydrogen oxidation reaction (HOR) activities of half-cell measurement using the electrode catalysts prepared according to Synthesis Examples 1 to 4 and Comparative Synthesis Examples 1 and 2, and a PtRu/C catalyst (commercial), respectively; and
FIG. 8 is a graph showing voltage with respect to current density of unit cells manufactured according to Example 1 and Comparative Examples 1 to 3.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

According to an embodiment of the present invention, an electrode catalyst for a fuel cell (hereinafter, referred to as "electrode catalyst") includes alloy particles including an alloy of a Group 8 metal and a Group 9 metal. The "alloy particle" in the specification, may be referred to as a "catalyst particle".

In a unit lattice of the "an alloy of a Group 8 metal and a Group 9 metal" Group 8 metal atoms and the Group 9 metal atoms co-exist. Thus, the "alloy particles including an alloy of a Group 8 metal and a Group 9 metal" are completely different from a mixture of Group 8 metal particles and Group 9 metal particles. In the mixture of Group 8 metal particles and Group 9 metal particles, Group 8 metal atoms or Group 9 metal atoms exist in a single unit lattice.

The alloy particles are particles in an amorphous (formless) form and exist such that they are independently separated from one another and dispersed on a predetermined support, and thus the alloy particles are different from a layer formed of the Group 8 metal and the Group 9 metal. The alloy particles including an alloy of a Group 8 metal and a Group 9 metal, which are particles in an amorphous (formless) form, have a far larger specific surface area that contacts any kinds of gases and/or liquids which are subjected to an electrochemical reaction than that of the layer formed of the Group 8 metal and the Group 9 metal, and thus may be usefully used as a catalyst, e.g., an electrode catalyst for a fuel cell. For example, the alloy particles may be supported on a carbonaceous support, which will be described below, and dispersed thereon.

The Group 8 metal may include at least one of iron (Fe), ruthenium (Ru), and osmium (Os). For example, the Group 8 metal may be Ru, but is not limited thereto.

The Group 9 metal may include at least one of cobalt (Co), rhodium (Rh), and iridium (Ir). For example, the Group 9 metal may be Ir, but is not limited thereto.

The amount of the Group 8 metal may be in the range of 8 at% to 92 at%, for example, in the range of 20 at% to 90 at% based on 100 at% of the alloy particles. The amount of the Group 9 metal may be in the range of 8 at% to 90 at%, for example, in the range of 10 at% to 80 at% based on 100 at% of the alloy particles. When the amounts of the Group 8 metal and the Group 9 metal are within the ranges described above, an electrode including the electrode catalyst may have excellent hydrogen oxidation performance.

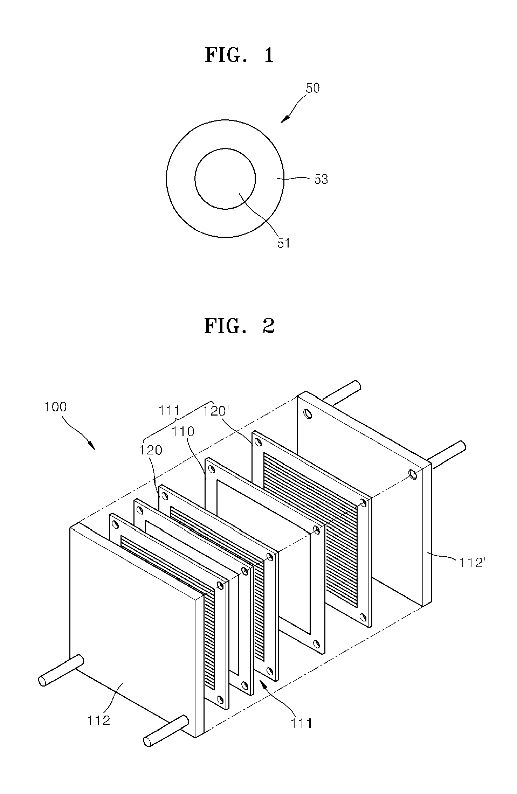

The alloy particles may have a core-shell structure with reference to FIG. 1. FIG. 1 is a cross sectional view schematically illustrating the alloy particles 50, the alloy particles 50 including a shell 53 that covers over all or part of the surface of a core 51 and the core 51 described above. The shell 53 may a continuous layer that covers over all of the surface of a core 51 or a non-continuous layer that covers over part of the surface of a core 51.

In one embodiment, the core 51 described above may include the Group 8 metal, but does not include the Group 9 metal; and the shell may include an alloy the Group 8 metal and the Group 9 metal. For example, the core-shell structure, the core 51 described above may consist of the Group 8 metal; and the shell may consist of an alloy of the Group 8 metal and Group 9 metal.

In another embodiment, the alloy particles may have a "Ru core"-"IrRu alloy shell" structure.

In another embodiment, the core 51 described above may include the alloy of the Group 8 metal and the Group 9 metal; and the shell may include the Group 9 metal, but does not include the Group 8 metal. For example, the core-shell structure, the core 51 described above may consist of the alloy of the Group 8 metal and the Group 9 metal; and the shell may consist of the Group 9 metal.

It is to be understood that even where the alloy particles, the core and the shell "consist of" a metal or alloy thereof, trace contaminants (e.g., less than 0.1 weight percent, or less than 500 parts per million of each contaminant) may be present, trace contaminants being elements that are not feasibly removable using current commercially available technologies.

In another embodiment, the alloy particles may have a "IrRu alloy core"-"Ir shell" structure.

An interlayer, which is not described in Fig. 1, may be further disposed between the core 51 and shell 53. Therefore, in other embodiment, the alloy particles may have a core-interlay-shell structure in which the interlayer is between the core and the shell.

In the core-interlayer-shell structure, the core may include the Group 8 metal, but does not include the Group 9 metal; the interlayer may include the alloy of the Group 8 metal and the Group 9 metal; and the shell may include the Group 9 metal, but does not include the Group 8 metal. For example, in the core-interlayer-shell structure, the core may consist of the Group 8 metal; the interlayer may consist of an alloy of the Group 8 metal and the Group 9 metal; and the shell may consist of the Group 9 metal.

In other embodiment, the alloy particles may have a "Ru core"-"IrRu alloy interlayer"-"Ir shell".

The structure of the alloy particle may be confirmed by analysis of extended X-ray absorption fine structure (EXAFS) which will be described later.

In one embodiment, the Group 8 metal may be Ru and the Group 9 metal may be Ir, but the Group 8 and 9 metals are not limited thereto.

The alloy particles of the electrode catalyst may consist of an alloy of the Group 8 metal and the Group 9 metal. For example, the alloy particles may be represented by Formula 1 below, but is not limited thereto:

<Formula 1> IrₓRu_{y}

wherein x and y are each independently a real number in the range of 1 to 10. In this regard, x/y indicates an atomic ratio of Ir to Ru (Ir/Ru).

For example, in Formula 1, x and y satisfy the conditions: 1≤x≤8 and 1≤y≤9.7, but are not limited thereto.

As another example, in Formula 1, x and y satisfy the conditions: 1≤x≤4 and 1≤y≤9.5, but are not limited thereto.

As another example, in Formula 1, x and y satisfy the conditions: 1≤x≤8 and 1≤y≤9, but are not limited to.

As another example, in Formula 1, x and y satisfy the conditions: 1≤x≤1.2 and 1≤y≤9, but are not limited thereto.

As another example, in Formula 1, x and y satisfy the conditions: 1≤x≤5 and 1≤y≤2, but are not limited thereto.

The alloy particles may further include an additional metal comprising at least one of nickel (Ni), palladium (Pd), platinum (Pt), Co, Fe, copper (Cu), tungsten (W), vanadium (V), niobium (Nb), molybdenum (Mo), and hafnium (Hf). These metals may be in the form of an alloy of the Group 8 metal and the Group 9 metal.

A content of the additional metals may, in total, be about 0.1 at% to about 50 at%, specifically about 1 at% to about 40 at%, more specifically about 2 at% to about 30 at%, based on a total content of the alloy particles. In an embodiment, a content of the additional metals may, in total, be about 0.1 at% to about 10 at%, specifically about 0.2 at% to about 8 at%, more specifically about 0.5 at% to about 5 at%, based on a total content of the alloy particles.

The electrode catalyst may further, in addition to the alloy particles described above, include at least one of Ni, Pd, Pt, Co, Fe, Cu, W, V, Nb, Mo, and Hf. These materials may be included in a coating layer which is formed above a portion of surfaces of the alloy particles, or in the form of particles which are physically mixed with the alloy particles.

An average diameter of the alloy particles may be in the range of 0.1nm to 100nm, specifically 0.5 nm to 30 nm. When the average diameter of the alloy particles is within the range described above, an electrode including the electrode catalyst may have excellent hydrogen oxidation performance.

The electrode catalyst may further include a carbonaceous support. In this case, the alloy particles may be supported on the carbonaceous support.

The carbonaceous support may be selected from electrically conductive materials. For example, the carbonaceous support may be Ketjen black, carbon black, graphite carbon, carbon nanotubes, carbon fiber, mesoporous carbon, graphene, or the like, but is not limited thereto, and these materials may be used alone or in a combination of at least two of these materials.

If the electrode catalyst further includes the carbonaceous support, the amount of the alloy particles may be in the range of 10 parts by weight to 80 parts by weight, for example, in the range of 40 parts by weight to 60 parts by weight based on 100 parts by weight of the electrode catalyst including the carbonaceous support. If a ratio of the alloy particles to the carbonaceous support is within the range described above, the electrode catalyst particles may have large specific surface area and a large amount of the electrode catalyst particles may be supported.

The electrochemical specific surface area of the electrode catalyst may be 20 square meters per gram (m²/g) to 500 m²/g, specifically 30 m²/g to 400 m²/g, more specifically 40 m²/g to 300 m²/g, based on a total weight of the Group 8 metal and the Group 9 metal.

A specific activity of the electrode catalyst may be 50 to 500 amperes per gram, based on a total weight of the Group 8 metal and the Group 9 metal.

A hydrogen oxidation activity of the electrode catalyst may be 80 % to 140 %, specifically 100 % to 120%, of a hydrogen oxidation activity of a carbon supported PtRu catalyst.

According to another embodiment, the electrode catalyst may have the carbonaceous support described above; and the alloy particles described above which is supported on the carbonaceous support. For example, the electrode catalyst may have the carbonaceous support described above; and the alloy particles represented by Formula 1 described above.

According to another aspect of the present invention, an electrode catalyst for a fuel cell includes catalyst particles comprising a Group 8 metal and a Group 9 metal. The catalyst particles may be represented by Formula 1 above. The catalyst particles may have a core-shell structure. In the core-shell structure, the core may include the Group 8 metal, but does not include the Group 9 metal; and the shell may include the Group 9 metal, but does not include the Group 8 metal. For example, the catalyst particles may have a core-shell structure in which the core consists of the Group 8 metal and the shell consists of the Group 9 metal. As one example, the catalyst particles may have a "Ru core"-"Ir shell" structure. The catalyst particles may further include at least one of nickel (Ni), palladium (Pd), platinum (Pt), Co, Fe, copper (Cu), tungsten (W), vanadium (V), niobium (Nb), molybdenum (Mo), and hafnium (Hf). The electrode catalyst may further include a carbonaceous support described above.

A method of preparing the electrode catalyst for a fuel cell will now be described in detail.

First, a mixture including a Group 8 metal precursor and a Group 9 metal precursor is provided. If the alloy particles of the electrode catalyst include two or more different Group 8 metals, two or more different Group 8 metal precursors may be used. As used herein the term "mixture" is inclusive of combinations, solutions, suspensions, dispersions, and the like.

The Group 8 metal precursor may include at least one compound of a chloride, a nitride, a cyanide, a sulfide, a bromide, a nitride, an acetate, a sulphate, an oxide, a hydroxide, and an alkoxide, each of which includes the Group 8 metal described above.

For example, if the Group 8 metal is ruthenium, the ruthenium precursor may be, but is not limited to, at least one compound of a ruthenium nitride, a ruthenium chloride, a ruthenium sulfide, a ruthenium acetate, a ruthenium acetylacetonate, a ruthenium cyanate, a ruthenium isopropyl oxide, and a ruthenium butoxide.

The Group 9 metal precursor may include at least one compound of a chloride, a nitride, a cyanide, a sulfide, a bromide, a nitride, an acetate, a sulphate, an oxide, a hydroxide, and an alkoxide, each of which includes the Group 9 metal described above.

For example, if the Group 9 metal is iridium, the iridium precursor may be, but is not limited to, at least one compound of an iridium nitride, an iridium chloride, an iridium sulfide, an iridium acetate, an iridium acetylacetonate, an iridium cyanate, an iridium isopropyl oxide, and an iridium butoxide.

The mixture may further include, in addition to the Group 8 metal precursor and the Group 9 metal precursor described above, at least one precursor of Ni, Pd, Pt, Co, Fe, Cu, W, V, Nb, Mo, and Hf (e.g., at least one compound of a chloride, a nitride, a cyanide, a sulfide, a bromide, a nitride, an acetate, a sulphate, an oxide, a hydroxide, and an alkoxide of at least one of Ni, Pd, Pt, Co, Fe, Cu, W, V, Nb, Mo, and Hf).

The mixture may further include a carbonaceous support. If the mixture further includes a carbonaceous support, electrode catalyst including the carbonaceous support and the alloy particles supported on the carbonaceous support may be obtained.

The mixture may further include, in addition to the Group 8 metal precursor and the Group 9 metal precursor, a solvent that dissolves these precursors. Examples of the solvent include glycol-based solvent, such as ethylene glycol, 1,2-propylene glycol, 1,3-butanediol, 1,4-butanediol, neopentyl glycol, diethylene glycol, 3-methyl-1,5-pentanediol, 1,6-hexanediol, trimethylol propane, and the like; alcohol-based solvents, such as methanol, ethanol, isopropyl alcohol (IPA), butanol, and the like; and water (H₂O). However, the solvent is not limited to the above examples, and any one of various known solvents which dissolve the precursors may be used.

The mixture may further include a chelating agent (e.g., citric acid, ethylene diamine tetraacetate (EDTA)) for simultaneously reducing the Group 8 metal precursor and the Group 9 metal precursor, a pH adjuster (e.g., NaOH aqueous solution), and the like.

Subsequently, the Group 8 metal precursor and the Group 9 metal precursor in the mixture are reduced to form an electrode catalyst with hydrogen oxidation activities which includes alloy particles including the Group 8 metal and the Group 9 metal. In this regard, if the mixture includes a carbonaceous support, an electrode catalyst including the alloy particles that are dispersed on the carbonaceous support may be obtained.

The reducing process of the precursors included in the mixture may be performed by adding a reducing agent to the mixture. Alternatively, the reducing process of the precursors included in the mixture may be performed by drying (e.g., drying under reduced pressure) the mixture to obtain a carbonaceous support-precursor composite in which the precursors are supported on the carbonaceous support and then heat treating (e.g., heat treating in an electrical furnace) the carbonaceous support-precursor composite in an inert or gas atmosphere (e.g., hydrogen atmosphere).

The reducing agent may be selected from materials that reduce the precursors included in the mixture. For example, the reducing agent may be hydrazine (NH₂NH₂), sodium borohydride (NaBH₄), formic acid, ascorbic acid, or the like, but is not limited thereto. The amount of the reducing agent may be in the range of 1 mole to 3 mole based on 1 mole of the Group 8 metal precursor and the Group 9 metal precursor. If the amount of the reducing agent is within the range described above, a satisfactory reduction reaction may be induced.

The heat treatment of the carbonaceous support-precursor composite in an inert atmosphere may be performed at a temperature in the range of 100°C to 500°C, for example, in the range of 150°C to 450°C; however, the heat treatment temperature is not limited thereto.

According to another embodiment of the present invention, a membrane electrode assembly (MEA) for a fuel cell includes a cathode, an anode facing the cathode, and an electrolyte membrane interposed between the cathode and the anode, wherein at least one of the cathode and the anode includes the electrode catalyst for a fuel cell described above. For example, the electrode catalyst may be included in the anode of the MEA.

According to another embodiment of the present invention, a fuel cell includes the MEA and separators disposed on both sides of the MEA. The MEA includes a cathode, an anode, and an electrolyte membrane disposed between the cathode and the anode, and at least one of the cathode and the anode includes the electrode catalyst described above. The electrode catalyst may be included in the anode of the fuel cell.

For example, the fuel cell may be a polymer electrolyte membrane fuel cell (PEMFC), a phosphoric acid fuel cell (PAFC), or a direct methanol fuel cell (DMFC).

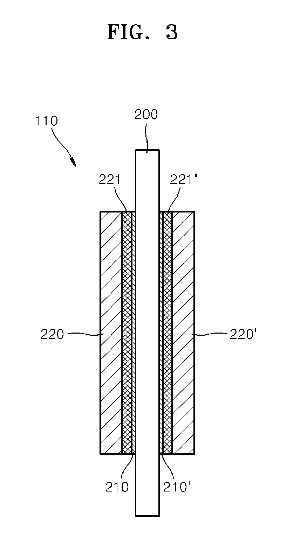

FIG. 2 is an exploded perspective view of a fuel cell 100 according to an embodiment, and FIG. 3 is a cross-sectional view of a MEA of the fuel cell 100 of FIG. 2, according to an embodiment.

Referring to FIG. 2, the fuel cell 100 includes two unit cells 111 that are interposed between a pair of holders 112 and 112'. Each of the unit cells 111 includes an MEA 110 and bipolar plates 120 and 120' disposed on both sides of the MEA 110 in a thickness direction of the MEA 110. The bipolar plates 120 and 120' may each include conductive metal or carbon and may each contact the MEA 110, so that the bipolar plates 120 and 120' function as a current collector and supply oxygen and a fuel to a catalyst layer of the MEA 110.

In FIG. 2, the fuel cell 100 includes two unit cells 111, but the number of unit cells is not limited thereto. For example, the number of the unit cells 111 may be tens to hundreds according to characteristics required for a fuel cell.

Referring to FIG. 3, the MEA 110 includes an electrolyte membrane 200; catalyst layers 210 and 210' that are disposed on both sides of the electrolyte membrane 200 in a thickness direction thereof, one of which includes the electrode catalyst according to an embodiment of the present invention; first gas diffusion layers 221 and 221' that are respectively disposed on the catalyst layers 210 and 210'; and second gas diffusion layers 220 and 220' that are respectively disposed on the first gas diffusion layers 221 and 221'.

The catalyst layers 210 and 210' may function as a fuel electrode and an oxygen electrode, each of which includes a catalyst and a binder, and may further include a material that increases an electrochemical surface area of the catalyst. A loading of the electrode catalyst on the catalyst layer 210 and 210' may be 0.01 mg/cm² to 1 mg/cm², based on a total weight of the Group 8 metal and the Group 9 metal and a surface area of the catalyst layer

The first gas diffusion layers 221 and 221' and the second gas diffusion layers 220 and 220' may each include, for example, carbon sheet, carbon paper, or the like, and may diffuse oxygen and a fuel supplied through the bipolar plates 120 and 120' to entire surfaces of the catalyst layers 210 and 210'.

The fuel cell 100 including the MEA 110 operates at a temperature of about 100°C to about 300°C. A fuel, for example, hydrogen is supplied to the catalyst layer 210 through the bipolar plate 120 and an oxidizing agent, for example, oxygen or air is supplied to the catalyst layer 210' through the bipolar plate 120. Also, the catalyst layer 210, hydrogen is oxidized to generate a hydrogen ion (H⁺) and then the hydrogen ion (H⁺) conducts the electrolyte membrane 200 and reaches the catalyst layer 210', and at the catalyst layer 210', the hydrogen ion (H⁺) electrochemically reacts with oxygen to generate water (H₂O) and electric energy. Also, the hydrogen supplied as a fuel may be a hydrogen that is generated by reforming hydrocarbon or alcohol, and the oxygen supplied as an oxidizing agent may be supplied with air.

One or more embodiments will now be described in further detail with reference to the following examples. These examples are for illustrative purpose only and are not intended to limit the scope of the one or more embodiments.

### Synthesis Example 1: Synthesis of IrRu/C catalyst

0.5 g of Ketjen Black (KB) as a carbonaceous support was added to a mixture including 0.785 g of iridium chloride as an iridium precursor, 0.443 g of ruthenium chloride as a ruthenium precursor, and distilled water, and the resultant mixture was then stirred. The stirred mixture was distilled under reduced pressure at 50°C and dried, and the resultant was heat treated at 300°C in a hydrogen atmosphere to reduce the iridium precursor and the ruthenium precursor that were supported on the carbonaceous support. As a result, IrRu/C was obtained as an electrode catalyst for a fuel cell.

### Synthesis Example 2: Synthesis of IrRu_{4/}C catalyst

IrRu₄/C was prepared as an electrode catalyst for a fuel cell in the same manner as in Synthesis Example 1, except that the iridium precursor was used in an amount of 0.393 g and the ruthenium precursor was used in an amount of 0.885 g.

### Synthesis Example 3: Synthesis of IrRu₆/C catalyst

IrRu₆/C was prepared as an electrode catalyst for a fuel cell in the same manner as in Synthesis Example 1, except that the iridium precursor was used in an amount of 0.293 g and the ruthenium precursor was used in an amount of 0.934 g.

### Synthesis Example 4: Synthesis of IrRu₉/C catalyst

IrRu₉/C was prepared as an electrode catalyst for a fuel cell in the same manner as in Synthesis Example 1, except that the iridium precursor was used in an amount of 0.213 g and the ruthenium precursor was used in an amount of 1.078 g.

### Synthesis Example 5: Synthesis of Ir₄Ru/C catalyst

Ir₄Ru/C was prepared as an electrode catalyst for a fuel cell in the same manner as in Synthesis Example 1, except that the iridium precursor was used in an amount of 1.077 g and the ruthenium precursor was used in an amount of 0.142 g.

### Comparative Synthesis Example 1: Preparation of Ir/C catalyst

An Ir/C catalyst was prepared in the same manner as in Synthesis Example 1, except that the iridium precursor was used in an amount of 1.219 g and the ruthenium precursor was not used.

### Comparative Synthesis Example 2: Preparation of Ru/C catalyst

A Ru/C catalyst was prepared in the same manner as in Synthesis Example 1, except that the iridium precursor was not used and the ruthenium precursor was used in an amount of 1.231 g.

**<Table 1 >**

| | Composition of catalyst | active particles supported on carbonaceous support | Atomic ratio of Ir to Ru |
|---|---|---|---|
| Synthesis Example 1 | IrRu/C | Alloy particles of iridium and ruthenium | 1:1 |
| Synthesis Example 2 | IrRu₄/C | Alloy particles of iridium and ruthenium | 1:4 |
| Synthesis Example 3 | IrRu₆/C | Alloy particles of iridium and ruthenium | 1:6 |
| Synthesis Example 4 | IrRu₉/C | Alloy particles of iridium and ruthenium | 1:9 |
| Synthesis Example 5 | Ir₄Ru/C | Alloy particles of iridium and ruthenium | 4:1 |
| Comparative Synthesis Example 1 | Ir/C | Iridium particles | - |
| Comparative Synthesis Example 2 | Ru/C | Ruthenium particles | - |

### Evaluation Example 1: Inductively coupled plasma (ICP) analysis

The catalysts prepared according to Synthesis Examples 1 to 5 and Comparative Synthesis Examples 1 and 2 were analyzed by ICP (ICP-AES, ICPS-8100, SHIMADZU / RF source 27.12 MHz / sample uptake rate 0.8 ml/min), and the results are shown in Table 1 below.

**<Table 2>**

| | Composition of catalyst | Metal content (wt%) | |
|---|---|---|---|
| | | Iridium | Ruthenium |
| Synthesis Example 1 | IrRu /C | 13.1 | 29.8 |
| Synthesis Example 2 | IrRu₄/C | 12.6 | 26.8 |
| Synthesis Example 3 | IrRu₆/C | 9.1 | 28.4 |
| Synthesis Example 4 | IrRu₉/C | 7.08 | 34.2 |
| Synthesis Example 5 | Ir₄Ru/C | 35.5 | 4.5 |
| Comparative Synthesis Example 1 | Ir/C | 39.2 | - |
| Comparative Synthesis Example 2 | Ru/C | - | 40.5 |

From the results shown in Table 2, it was confirmed that the catalysts of Synthesis Examples 1 to 5 included both iridium and ruthenium.

### Evaluation Example 2: X-ray diffraction (XRD) analysis

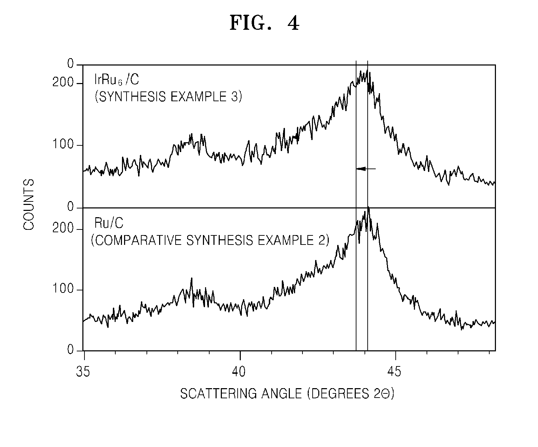

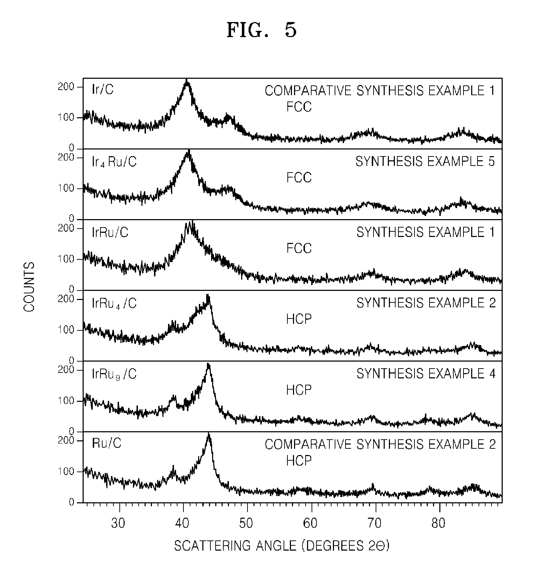

XRD analysis (MP-XRD, Xpert PRO, Philips / Power 3kW) was performed on the catalysts of Synthesis Examples 1, 2, 4 and 5 and Comparative Synthesis Examples 1 and 2, and the results are shown in FIGS. 4 and 5. A lattice constant of each catalyst is shown in Table 3 below:

**<Table 3>**

| | Composition of catalyst | Crystal structure of catalyst particles | Diffraction angle (2θ of main peak of Ir) (111) | Diffraction angle (2θ of main peak of Ru) (101) |
|---|---|---|---|---|
| Synthesis Example 1 | IrRu /C | FCC¹ | 41.194 | - |
| Synthesis Example 2 | IrRu₄/C | HCP² | - | 43.845 |
| Synthesis Example 4 | IrRu₉/C | HCP | - | 43.977 |
| Synthesis Example 5 | Ir₄Ru/C | FCC | 40.734 | |
| Comparative | Ir/C | FCC | 40.605 | - |
| Synthesis Example 1 | | | | |
| Comparative Synthesis Example 2 | Ru/C | HCP | - | 44.037 |

| | | | | |
|---|---|---|---|---|
| 1: Face Centered Cubic 2: Hexagonal Closed-Packed | | | | |

Referring to Table 3 and FIGS. 4 and 5, it is confirmed that each of the catalysts of Synthesis Examples 1, 2, 4 and 5have a different crystal structure according to a ratio of elements (metal) included in each catalyst and includes alloy particles having a crystal structure of an element that is included therein in a large amount.

As a result of performing ICP analysis on an actual composition of the IrRu/C catalyst of Synthesis Example 1, the actual composition of the IrRu/C catalyst of Synthesis Example 1 was Ir_{1.2}Ru₁/C (refer to Table 2). As a result, an XRD pattern of the Ir_{0.5}Ru_{0.5}/C catalyst of Synthesis Example 1 was confirmed such that a main peak of Ir was dominantly observed.

Also, the main peak (2θ=41.194) of the electrode catalyst of Synthesis Example 1 was shifted to a larger value than the main peak (2θ=40.605) of the electrode catalyst of Comparative Synthesis Example 1. From this result, it was confirmed that the electrode catalyst of Synthesis Example 1 is alloy particles of iridium and ruthenium. In addition, the main peak (2θ=43.895) of the electrode catalyst of Synthesis Example 2 and the main peak (2θ=43.977) of the electrode catalyst of Synthesis Example 4 were shifted to a smaller value than the main peak (2θ=44.037) of the electrode catalyst of Comparative Synthesis Example 2. From this result, it was confirmed that the electrode catalysts of Synthesis Example 1 comprised alloy particles of iridium and ruthenium.

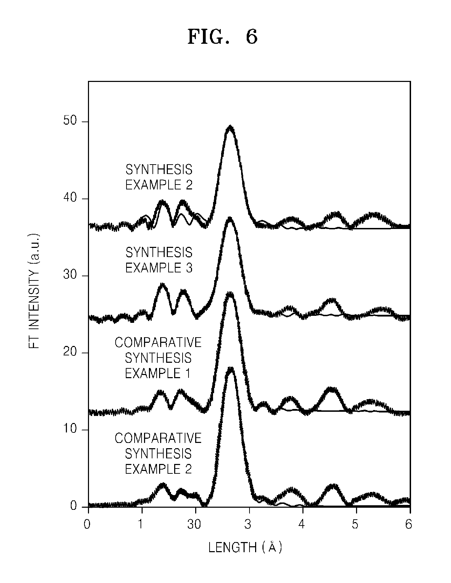

Referring to the catalysts of Synthesis Examples 2 to 5, and Comparative Synthesis Examples 1 and 2, an analysis of EXAFS was performed to evaluate a structure of the catalyst, and the results are shown in FIG. 6 and Table 4.

An experiment of EXAFS was performed by analyzing the results measured using R-XAS apparatus by Rigaku Inc. under room temperature (25°C) and atmospheric pressure, using Artemis and Athena.

**<Table 4>**

| Absorption edge | Synthesis No. | Composition of catalyst | Observed binding | R(nm) | N | σ 2(pm2) |
|---|---|---|---|---|---|---|
| absorption edge of Ir LIII | Comparative Synthesis Example 1 | Ir/C | Ir-C | 0.202 | 5.0 | 73 |
| | | | Ir-Ir | 0.270 | 5.3 | 62 |
| | Synthesis Example 5 | Ir₄Ru/C | Ir-C | 0.196 | 2.0 | 0 |
| | | | Ir-Ir | 0.263 | 9.2 | 108 |
| | | | Ir-Ru | 0.259 | 0.5 | 44 |
| | Synthesis Example 1 | IrRu/C | Ir-C | 0.197 | 2.2 | 2 |
| | | | Ir-Ir | 0.259 | 3.5 | 50 |
| | | | Ir-Ru | 0.261 | 1.0 | 22 |
| | Synthesis Example 2 | IrRu₄/C | Ir-C | 0.196 | 2.1 | 0 |
| | | | Ir-Ir | 0.255 | 3.8 | 57 |
| | | | Ir-Ru | 0.258 | 1.2 | 41 |
| | Synthesis Example 3 | IrRu6/C | Ir-C | 0.197 | 2.9 | 0 |
| | | | Ir-Ir | 0.260 | 2.1 | 38 |
| | | | Ir-Ru | 0.263 | 1.8 | 20 |
| | Synthesis Example 4 | IrRu₉/C | Ir-C | 0.197 | 3.1 | 0 |
| | | | Ir-Ir | 0.256 | 1.2 | 0 |
| | | | Ir-Ru | 0.260 | 0.8 | 0 |
| absorption edge of Ru K | Comparative Synthesis Example 2 | Ru/C | Ru-Ru | 0.268 | 6.4 | 57 |
| | Synthesis Example 4 | IrRu₉/C | Ru-Ru | 0.267 | 3.1 | 19 |
| | | | Ru-Ir | 0.265 | 1.3 | 11 |
| | Synthesis Example 3 | IrRu₆/C | Ru-Ru | 0.266 | 2.2 | 2 |
| | | | Ru-Ir | 0.264 | 1.4 | 0 |
| | Synthesis Example 2 | IrRu₄/C | Ru-Ru | 0.266 | 3.5 | 39 |
| | | | Ru-Ir | 0.262 | 2.7 | 54 |

In Table 4, R is a distance to a neighboring atom; N is the number of neighboring atoms; σ² is the disorder in the neighbor distance.

Referring to Table 4 and FIG. 6, as a result of quantitative analysis of the local structure for each absorption edge of the metals, binding of Ir and Ru around Ir atoms and simultaneous present of Ru and Ir around Ru atoms were confirmed among the catalysts of Synthesis Examples 1 to 5. Thereby, it was confirmed that an alloy of Ir and Ru was formed within the catalysts of Synthesis Examples 1 to 5.

On the other hand, in comparison with N value (atom coordination number) of Ru-Ir binding from absorption edge of Ru K in Table 4, it was confirmed that when the Ir is increased, Ir coordination around Ru is also increased (namely, Synthesis Example 4: 13/ Synthesis Example 3: 14/ Synthesis Example 2: 2.7). In comparison with N value of Ru-Ru binding from absorption edge of Ru K in Table 4, it was confirmed that the coordination numbers between Ru were maintained in a practical way without a significant increase (namely, Synthesis Example 4: 3.1/ Synthesis Example 3: 2.2/ Synthesis Example 4: 3.5). Also, N value of Ir-C(O) binding from absorption edge of Ir L_{III} in Table 4 was confirmed to have a certain level of value. Since the amount of Ir is relatively large on the outside of the catalyst particles of Synthesis Examples 1 to 5, Ir may be bound to a carbon (C) or oxygen on the support. Therefore, it was confirmed that the catalyst particles of Synthesis Examples 1 to 5 may have a "Ru core"-"IrRu alloy shell" structure; a "IrRu alloy core"-"Ir shell" structure; or a "Ru core"-"IrRu alloy interlayer"-"Ir shell" structure.

### Evaluation Example 4: Half-cell performance evaluation

A rotating disk electrode (RDE) was prepared as a working electrode. The RDE was prepared by mixing each of the electrode catalysts of Synthesis Examples 1 to 4 and Comparative Synthesis Examples 1 and 2 and a PtRu/C catalyst manufactured by TKK (the amount of alloy particles of Pt and Ru supported on a carbonaceous support is 53.4 wt% based on 100 wt% of the electrode catalyst, an atomic ratio of Pt to Ru is 1:1.5) with a Nafion solution (Nafion perfluorinated ion-exchange resin, 5 wt% solution in a mixture of lower aliphatic alcohols and water, Aldrich) and homogenizing each catalyst therein to prepare a catalyst slurry and coating the catalyst slurry on a glassy carbon to form a thin-film electrode.

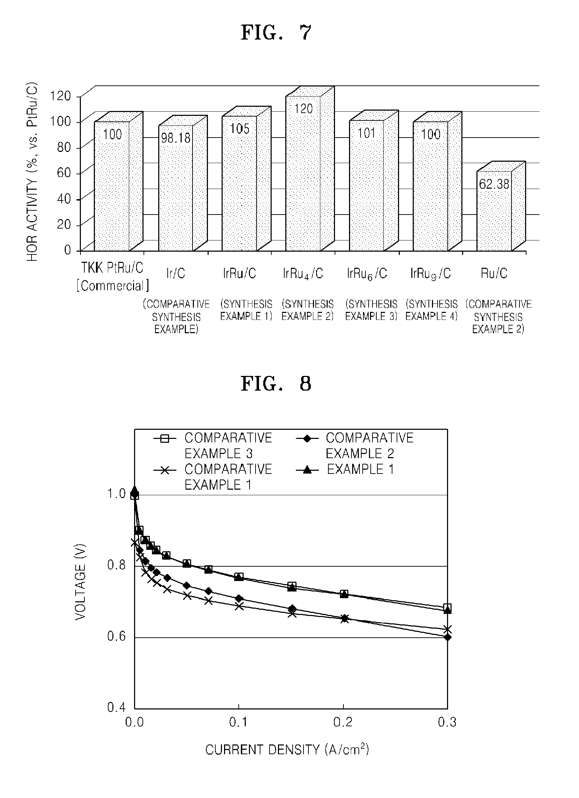

Electrochemical analysis was performed using a three-electrode system. In this regard, a hydrogen-saturated aqueous solution (0.1M H₃PO₄) was used as an electrolyte, and a Pt foil and an Ag/AgCl electrode were used as a counter electrode and a reference electrode, respectively. All electrochemical experiments were performed at room temperature (25°C). The measurement results are illustrated in FIG. 7.

Referring to FIG. 7, it is confirmed that half cells including the electrode catalysts of Synthesis Examples 1 to 4 have higher HOR performance than half cells including the electrode catalysts of Comparative Synthesis Examples 1 and 2 and have a HOR performance that is the same as or higher HOR performance than a half cell including the PtRu/C catalyst.

### Example 1

An anode of a PEMFC was prepared as follows. 0.03 g of polyvinylidene fluoride (PVDF) per 1 g of the electrode catalyst (IrRu₄/C catalyst) of Synthesis Example 2 was mixed with n-methyl-2-pyrrolidone, as a solvent, in an appropriate amount to prepare an anode-forming slurry. The anode-forming slurry was coated on a microporous layer-coated carbon paper by using a bar coater, and the resultant carbon paper was then dried by gradually raising the temperature from room temperature (25°C) to 150°C to obtain an anode. A loading amount of the electrode catalyst of Synthesis Example 2 in the anode was 1 mg_{RuIr}/cm².

A cathode was prepared using the same method as that used to prepare the anode, except that a carbon-supported PtCo catalyst (Tanaka Precious Metals, Pt: 45 wt%, Co: 5 wt%) was used instead of the electrode catalyst of Synthesis Example 2. A loading amount of the carbon-supported PtCo catalyst in the cathode was 1.5 mg_{Pt}/cm².

Then, 85% phosphoric acid-doped poly(2,5-benzimidazole) as an electrolyte membrane was disposed between the anode and the cathode, thereby completing the manufacture of a fuel cell.

### Comparative Example 1

A fuel cell was manufactured in the same manner as in Example 1, except that the electrode catalyst (Ir/C catalyst) of Comparative Synthesis Example 1 was used instead of the electrode catalyst of Synthesis Example 2.

### Comparative Example 2

A fuel cell was manufactured in the same manner as in Example 1, except that the electrode catalyst (Ru/C catalyst) of Comparative Synthesis Example 2 was used instead of the electrode catalyst of Synthesis Example 2.

### Comparative Example 3

A fuel cell was manufactured in the same manner as in Example 1, except that a PtRu/C catalyst manufactured by TKK (an amount of alloy particles of Pt and Ru supported on a carbonaceous support was 53.4 wt% based on 100 wt% of the electrode catalyst, an atomic ratio of Pt to Ru was 1:1.5) was used instead of the electrode catalyst of Synthesis Example 2.

### Evaluation Example 5: Unit cell performance evaluation

Performances of the fuel cells manufactured according to Example 1 and Comparative Examples 1 to 3 were evaluated using non-humidified air as a cathode and non-humidified hydrogen as an anode at 150°C, and the results are illustrated in FIG. 8.

Referring to FIG. 8, it was confirmed that an open circuit voltage (OCV) of the fuel cell of Example 1 was higher than that of each of the fuel cells of Comparative Examples 1 to 3. In this regard, the OCV is related to an oxygen reduction reaction onset potential of a catalyst, and thus it was confirmed that the performance of the fuel cell of Example 1 was higher than the performances of the fuel cells of Comparative Examples 1 to 2.

As described above, according to the one or more of the above embodiments of the present invention, an electrode catalyst for a fuel cell has high hydrogen oxidation activity, and thus a high-quality fuel cell may be manufactured at low costs.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. An electrode catalyst for a fuel cell, including alloy particles comprising an alloy of a Group 8 metal and a Group 9 metal.

2. The electrode catalyst of claim 1, wherein the Group 8 metal comprises at least one of iron (Fe), ruthenium (Ru), and osmium (Os).

3. The electrode catalyst of any of claims 1-2, wherein the Group 9 metal comprises at least one of cobalt (Co), rhodium (Rh), and iridium (Ir).

4. The electrode catalyst of any of claims 1-3, wherein an amount of the Group 8 metal is in a range of 8 at% to 92 at%, preferably in a range of 20 at% to 90 at% based on 100 at% of the alloy particles.

5. The electrode catalyst of any of claims 1-4, wherein an amount of the Group 9 metal is in a range of 8 at% to 90 at% based on 100 at% of the alloy particles.

6. The electrode catalyst of any of claims 1-5, wherein the alloy particles have a core-shell structure;
i) the core comprises the Group 8 metal, but does not comprise the Group 9 metall; and the shell comprises the alloy of the Group 8 metal and the Group 9 metal; or
ii) the core comprises the alloy of the Group 8 metal and the Group 9 metal; and the shell comprises the Group 9 metal, but does not comprise the Group 8 metal.

7. The electrode catalyst of any of claims 1-5, wherein the alloy particles have a core-interlayer-shell structure in which the interlayer is between the core and the shell;
the core comprises the Group 8 metal, but does not comprise the Group 9 metal;
the interlayer comprises the alloy of the Group 8 metal and the Group 9 metal; and
the shell comprises the Group 9 metal, but does not comprise the Group 8 metal.

8. The electrode catalyst of any of claims 1-7, wherein the Group 8 metal is ruthenium and the Group 9 metal is iridium.

9. The electrode catalyst of any of claims 1-8, wherein the alloy particles further comprise at least one of nickel (Ni), palladium (Pd), platinum (Pt), cobalt (Co), iron (Fe), copper (Cu), tungsten (W), vanadium (V), niobium (Nb), molybdenum (Mo), and hafnium (Hf).

10. The electrode catalyst of any of claims 1-9, further comprising a carbonaceous support, wherein the alloy particles are supported on the carbonaceous support.

11. A method of preparing an electrode catalyst for a fuel cell, the method comprising:
providing a mixture comprising a Group 8 metal precursor and a Group 9 metal precursor; and
reducing the Group 8 metal precursor and the Group 9 metal precursor in the mixture to form an electrode catalyst for a fuel cell which comprises alloy particles comprising an alloy of a Group 8 metal and a Group 9 metal.

12. The method of claim 11, wherein the mixture further comprises a carbonaceous support, and the electrode catalyst further comprises the carbonaceous support, wherein the alloy particles are supported on the carbonaceous support.

13. A membrane electrode assembly for a fuel cell, comprising:
a cathode;
an anode facing the cathode; and
an electrolyte membrane interposed between the cathode and the anode,
wherein at least one of the cathode and the anode comprises the electrode catalyst according to any of claims 1-10.

14. The membrane electrode assembly of claim 13, wherein the anode comprises the electrode catalyst.

15. A fuel cell comprising the membrane electrode assembly of claim 13 or 14.
